# EUROPEAN PATENT APPLICATION

(11) **EP 4 570 539 A1**
(43) Date of publication of application: **18.06.2025**
(21) Application number: 24219984.2
(22) Date of filing: 13.12.2024
(51) Int. Cl.: B60H 1/00, B60H 1/32, B60P 3/20, B65D 88/74

(54) **AIR DIFFUSER FOR AN EVAPORATOR OF A TRANSPORT REFRIGERATION UNIT**

(30) Priority: 15.12.2023 US 202363610484 P
(71) Applicant: Carrier Corporation, Palm Beach Gardens, FL 33418 (US)
(72) Inventor: KNISELY, Brian, East Syracuse (US)
(74) Representative: Dehns

(57) **Abstract**

Air diffuser (100) comprising a thermal barrier (110) and a diffuser cover (102) defining a shape of the diffuser (100), wherein the diffuser (100) further comprises an inlet (100-1) having a circular profile, an outlet (100-2) having a rounded-rectangular or oval-shaped profile, and a flow path (100-3) extending in an upward direction from the inlet (100-1) and turning substantially by a 90° angle into a substantially horizontal direction towards the outlet (100-2), an internal flow area of the flow path (100-3) increases from the inlet (100-1) towards the outlet (100-2), the diffuser (100) further comprises one or more turning vanes (104-1-104-N) which are configured at the outlet (100-2) such that at least a curved portion of the turning vanes (104-1-104-N) extends at least partially into the flow path (100-3), one or more turning vanes (104-1-104-N) have a varying shape where a curved portion at a center transitions to a flat profile portion at lateral ends of the corresponding tuning vanes (104-1-104-N), and one or more guide vanes (106) configured at the outlet (100-2) of the diffuser cover (102).

## Description

### BACKGROUND

This invention relates to the field of evaporator air management systems for transport refrigeration units, and more particularly, an air diffuser for an evaporator of a transport refrigeration unit.

### SUMMARY

According to a first aspect of the invention there is provided an air diffuser for an evaporator of a transport refrigeration unit (TRU). The diffuser comprises a thermal barrier and a diffuser cover defining a shape of the diffuser, the diffuser comprises an inlet having a circular profile, an outlet having a rounded-rectangular or oval-shaped profile, and a flow path extending in an upward direction from the inlet and turning substantially by a 90° angle into a substantially horizontal direction towards the outlet, wherein an internal flow area of the flow path increases from the inlet towards the outlet; one or more turning vanes configured at the outlet such that at least a curved portion of the turning vanes extends at least partially into the flow path, wherein the one or more turning vanes are having a varying shape where the curved portion at a center transitions to a flat profile portion at lateral ends of the corresponding tuning vanes; and one or more guide vanes configured at the outlet of the diffuser cover.

Optionally, the one or more turning vanes are configured parallel to each other with a predefined gap therebetween such that the front end of the one or more turning vanes remains in line and a depth of the corresponding turning vanes, extending into the flow path, progressively increases from a bottom-most turning vane towards a top-most turning vane among the one or more turning vane.

Optionally, the one or more turning vanes are configured at the outlet such that a downward extending curved portion of the turning vanes extends at least partially into the turning portion of the flow path to redistribute incoming air while flowing through the turning portion of the flow path.

Optionally, the flow path at the outlet of the diffuser comprises inward-angled walls.

Optionally, the one or more turning vanes and the one or more guide vanes are arranged in predefined orientations to form a finger-guard at the outlet to prevent insertion of fingers or hand into the diffuser via the outlet.

Optionally, the one or more turning vanes are configured horizontally and the one or more guide vanes are configured vertically to form a grid.

Optionally, the one or more turning vanes and the one or more guide vanes are arranged in a predefined geometric configuration selected from any of: the one or more turning vanes and the one or more guide vanes being oriented at predefined arbitrary angles; the one or more turning vanes and the one or more guide vanes forming a hexagon-shaped cells, and/or the one or more turning vanes and the one or more guide vanes being non-uniformly spaced with respect to each other.

Optionally, a ratio of an area of the inlet to an area of the outlet is in a range selected from 1.1 to 2.0.

Optionally, the outlet has a width-to-height ratio of less than 4.

Optionally, the one or more turning vanes and/or the one or more guide vanes are integrated into the outlet of the diffuser, forming a single structure.

Optionally, at least a part of the flow path is formed by a single-piece molded part comprising of any of the diffuser cover, the one or more turning vanes, the one or more guide vanes, and/or finger-guard components.

Optionally, the one or more turning vanes and/or the one or more guide vanes are configured to be removably attached to the diffuser.

Optionally, the one or more turning vanes and/or the one or more guide vanes and/or the inward-angled walls are configured into a frame forming an auxiliary diffuser, wherein the auxiliary diffuser is configured to be attached at the outlet of the diffuser.

Optionally, the one or more fans are configured upstream of the outlet of the diffuser or at the inlet of the diffuser.

Optionally, the one or more fans are selected from a group comprising an axial fan, a centrifugal fan, and/or a mixed-flow or diagonal-flow fan.

Optionally, the inlet of the diffuser is configured to accommodate the one or more fans in series and/or parallel.

Optionally, the diffuser comprises one or more turbulence control elements comprising wired screens at first predefined regions between the one or more guide vanes and/or the one or more turning vanes.

Optionally, the diffuser comprises one or more flow straightening elements comprising honeycombs at second predefined regions between the one or more guide vanes and/or the one or more turning vanes.

Optionally, the diffuser is configured to be configured downstream of evaporator coils or evaporator fans associated with the evaporator, wherein the diffuser facilitates the incoming air from the evaporator coils to flow in an upward direction from the inlet, turning substantially by a 90° angle into a substantially horizontal direction towards the outlet, and further flowing out of the outlet in a substantially horizontal direction.

It will be appreciated that any one or more of the above optional features may be present in a same embodiment of the air diffuser in accordance with the invention. That is, while some embodiments of the invention may include none of the above optional features, other embodiments may include one, two or more of the optional features described herein. It will further be appreciated that the foregoing summary is illustrative only and is not intended to be in any way limiting. In addition to the illustrative aspects, embodiments, and features described above, further aspects, embodiments, features, and techniques of the subject disclosure will become more apparent from the following description taken in conjunction with the drawings.

### BRIEF DESCRIPTION OF THE DRAWINGS

The accompanying drawings are included to provide a further understanding of the subject disclosure and are incorporated in and constitute a part of this specification. The drawings illustrate exemplary embodiments of the subject disclosure and, together with the description, serve to explain the principles of the subject disclosure. The invention is not limited by the drawings, however; rather, the scope of protection is defined by the appended claims.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIGs. 1A to 1D illustrate exemplary views of the air diffuser for the evaporator of a transport refrigeration unit (TRU), where FIG. 1D illustrates an enlarged view of the grill section of the air diffuser of FIG. 1A to 1C.
FIG. 1E illustrates an exemplary interior view of the air diffuser.
FIGs. 2A to 2C illustrate exemplary views of the air diffuser installed downstream of evaporator coils in an evaporator compartment of the TRU.
FIGs. 2D and 2E illustrate exemplary representations depicting the airflow direction in the TRU and the cargo space.
FIG. 3 illustrates an exemplary representation depicting the TRU attached to a trailer being moved by a truck.
FIG. 4 illustrates an exemplary airflow path through the diffuser depicting the function of the turning vanes in the diffuser to turn the flow and produce a cohesive jet at the outlet.

### DETAILED DESCRIPTION

The following is a detailed description of embodiments of the subject disclosure depicted in the accompanying drawings. The embodiments are in such detail as to clearly communicate the subject disclosure. However, the amount of detail offered is not intended to limit the anticipated variations of embodiments; on the contrary, the intention is to cover all embodiments falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components, respectively, as the diffuser, fans, evaporator, TRU, and corresponding components, described herein may be oriented in any desired direction.

Trailer refrigeration units (TRU) are integral components of the transportation industry, playing an important role in preserving and controlling the temperature of goods during transit. TRUs typically consist of a refrigeration system, as well as air management systems, all contained within a single unit mounted on the trailer. One of the significant challenges associated with trailer refrigeration systems is efficiently managing the airflow as it transitions from the fan to the evaporator outlet and further into the cargo space of the trailer. This airflow path typically includes a 90-degree turn, leading to the emergence of high discharge velocity and aerodynamic losses, and poor outlet air jet behavior.

The existing solutions accelerate the airflow through the 90-degree turn, resulting in elevated discharge velocities and significant aerodynamic losses. These issues contribute to higher power demands on the fan, leading to inefficiency and increased energy consumption. Moreover, this high discharge velocity may lead to noise generation, which is undesirable. In addition to aerodynamic losses, the existing solutions result in poor outlet jet behavior. The air jet tends to impinge on the ceiling and spread laterally, rather than being effectively distributed throughout the cargo space. This poor distribution impacts temperature control within the cargo space, potentially causing temperature variations and product quality issues during transportation.

There is therefore a need for a solution to effectively address the challenges of high discharge velocity, aerodynamic losses, and poor outlet jet behavior that are commonly associated with existing air management systems associated with TRUs.

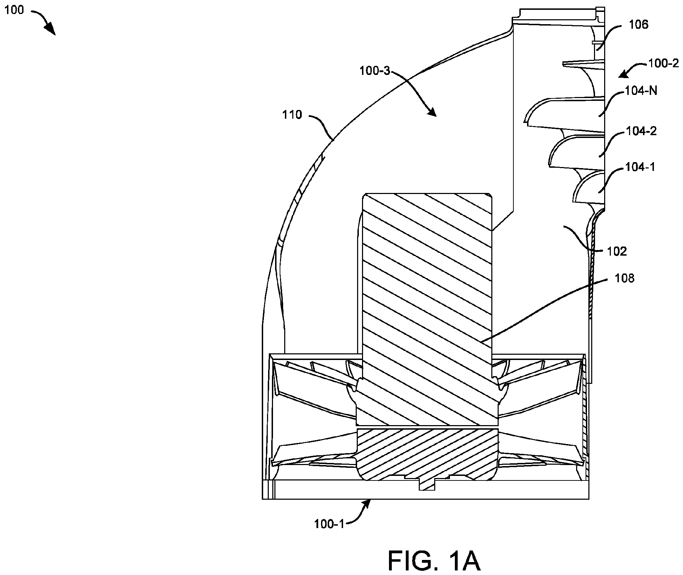

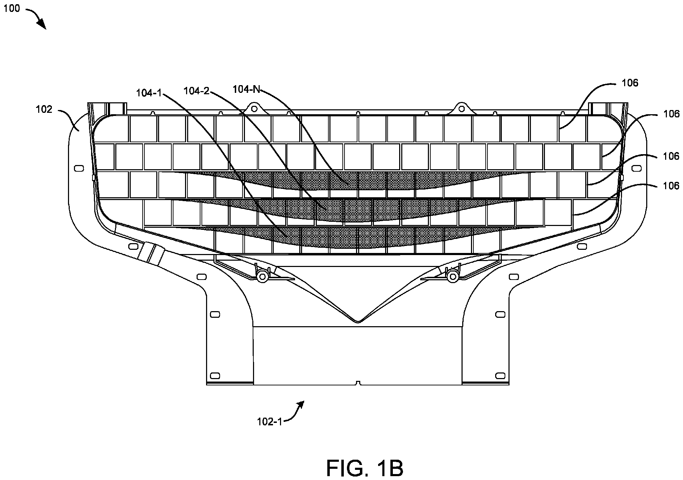

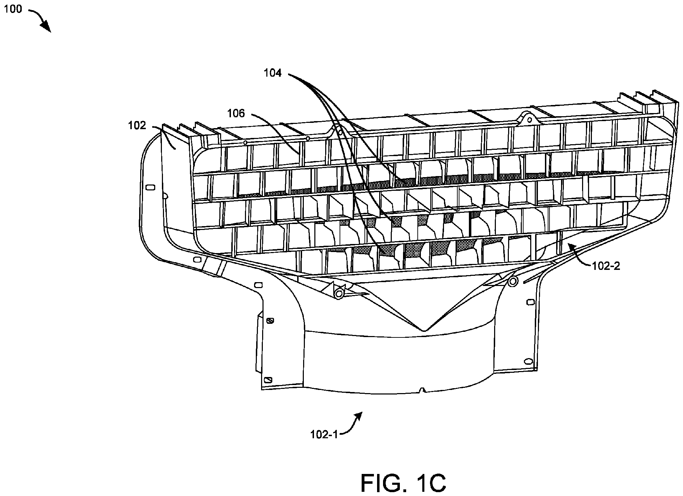

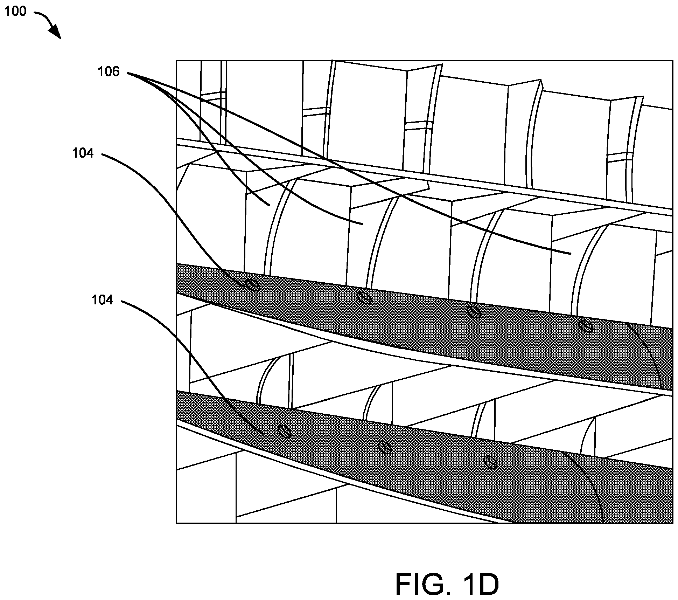

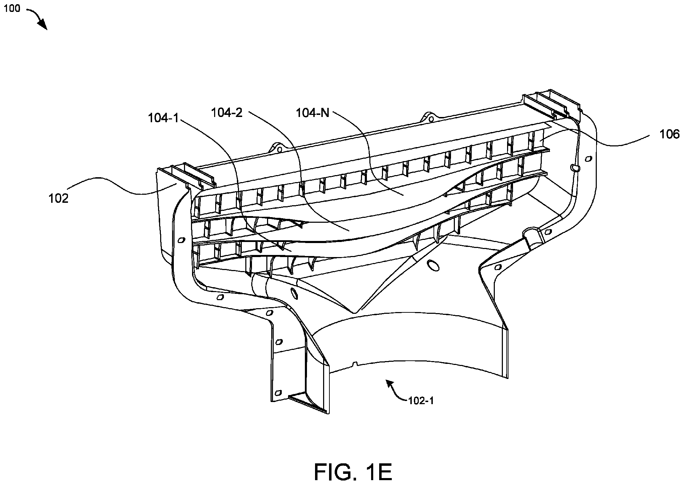

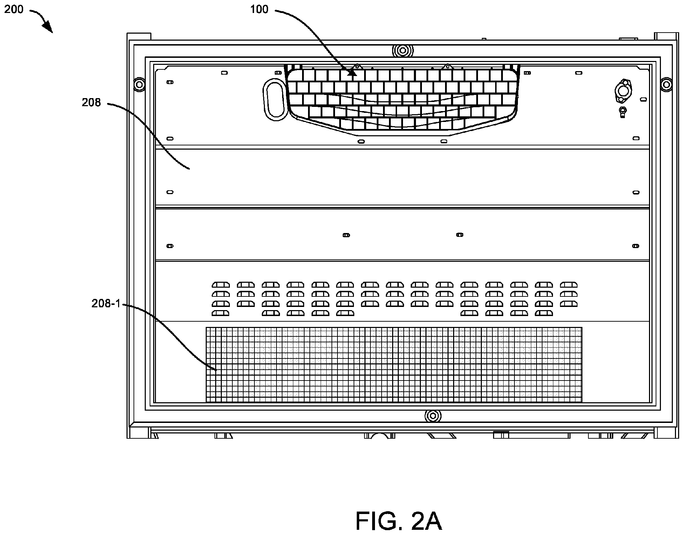

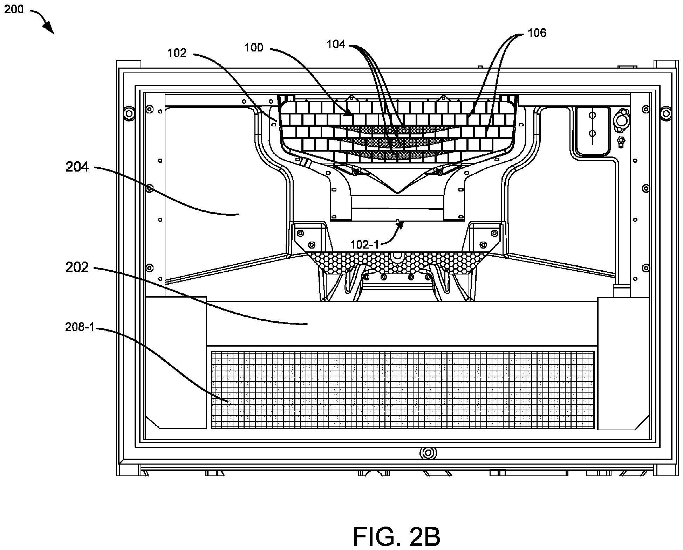

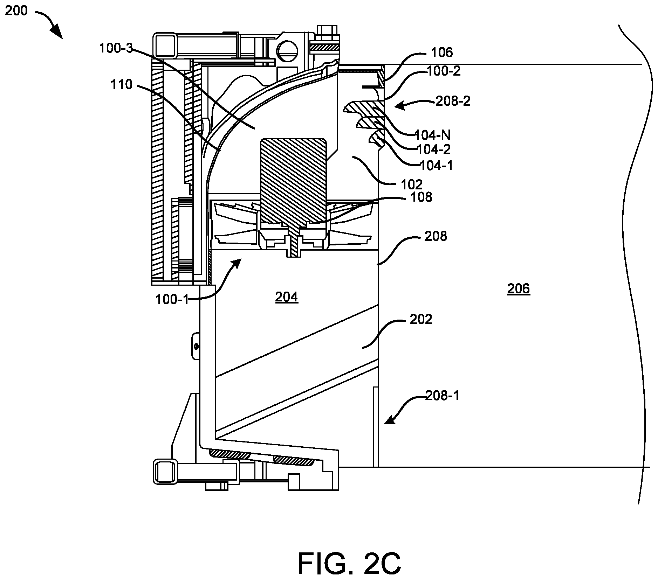

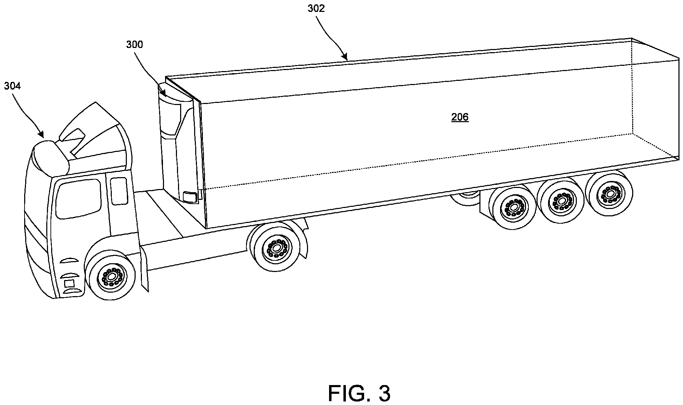

Referring to FIGs. 1A to 3, an air diffuser (also referred to as nozzle) 100 for an evaporator system 200 of a transport refrigeration unit (TRU) 300 is disclosed. In one or more embodiments, the TRU 300 can be attached to a trailer 302 being moved by a truck 304 as shown in FIG. 3. In one or more embodiments, the air diffuser 100 can be formed by two components: the thermal barrier 110 (or interface dividing the evaporator and condenser sections of the unit) and the diffuser cover 102 which together define the shape of the diffuser 100. The diffuser section 100 can include an inlet 100-1, an outlet 100-2, and a flow path 100-3 connecting the inlet 100-1 and the outlet 100-2. Referring to FIGs. 2A to 3, the diffuser 100 can be configured within an evaporator compartment 204 (shown in FIG. 2B) of the TRU 300, behind a back panel 208 that separates the transportation cargo space 206 and the evaporator compartment 204 of the TRU 300. In one or more embodiments, the back panel 208 can be formed to define an evaporator inlet (with or without grilles) 208-1 at bottom and an evaporator outlet 208-2 at top through which the transportation cargo space 206 is conditioned by the evaporator section 200 of the TRU 300. The evaporator system 200 can include evaporator coils 202 configured downstream of the evaporator inlet 208-1, with the diffuser inlet 100-1 configured downstream of the evaporator coils 202.

In addition, one or more fans 108 can also be configured upstream and/or downstream of the evaporator coils 202 to facilitate the inflow of air from the transportation cargo into the evaporator compartment 204, further facilitating the air to flow across the evaporator coils 202 to cool the air, and further supplying the cooled air into the transportation cargo via the diffuser 100. In one or more embodiments, the fans 108 can be selected from a group comprising an axial fan, a centrifugal fan, and/or a mixed-flow or diagonal-flow fan. Further, the inlet 100-1 of the diffuser 100 can be configured to accommodate the fans 108 in series and/or parallel.

In one or more embodiments, referring to FIGs. 1A to 1E, the diffuser 100 can include the inlet 100-1 having a circular profile, the outlet 100-2 having a rounded-rectangular or oval-shaped profile, and the flow path 100-3 extending in an upward direction from the inlet 100-1 and turning substantially by a 90° angle into a substantially horizontal direction towards the outlet 100-2, such that an internal flow area of the flow path 100-3 increases or expands from the inlet 100-1 towards the outlet 100-2, thereby reducing the mean airflow velocity while recovering the static pressure. However, in some embodiments, the inlet 100-1 and the outlet 100-2 of the diffuser 100 may also have a different profile, without any limitations. Further, in one or more embodiments, a ratio of the area of the inlet 100-1 to the area of the outlet 100-2 of the diffuser 100 can be in a range selected from 1.1 to 2.0, but not limited to the like. Furthermore, in one or more embodiments, the rounded-rectangular or oval-shaped outlet 100-2 can have a width-to-height ratio of less than 4, but not limited to the like.

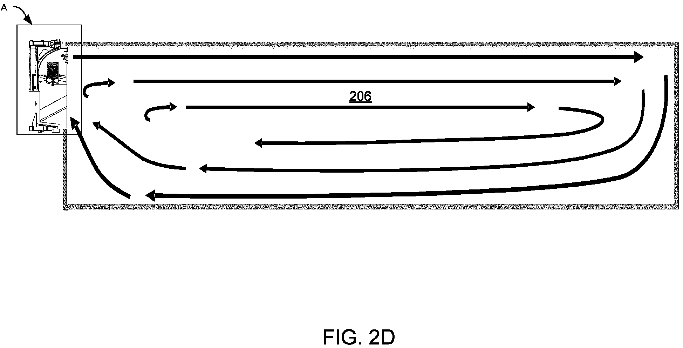

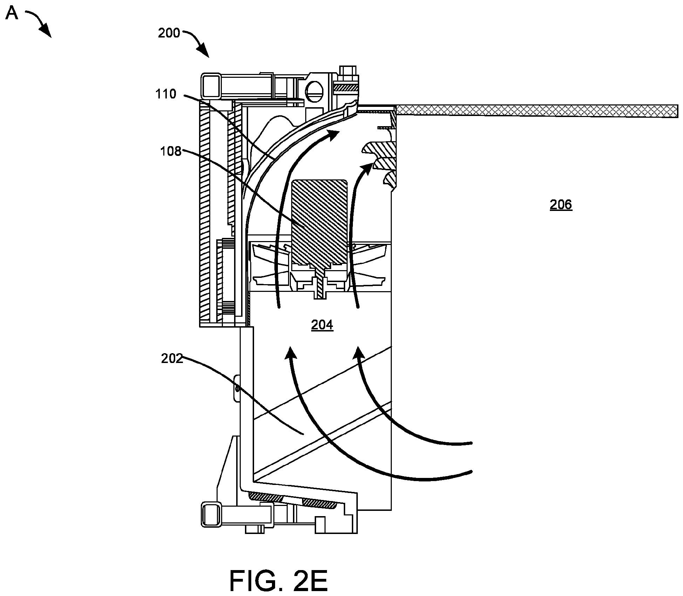

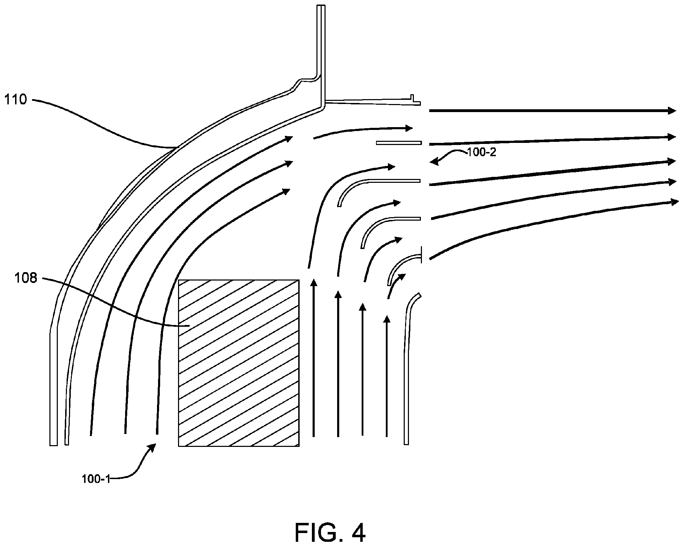

In one or more embodiments, the diffuser 100 can include one or more turning vanes 104-1 to 104-N (collectively referred to as turning vanes 104, herein) configured at the outlet 100-2 such that at least a curved portion of the turning vanes 104 extends at least partially into the flow path 100-3 of the diffuser 100. In addition, one or more guide vanes 106 having a flat or curved profile can also configured at the outlet 100-2 of the diffuser 100. Further, the flow path 100-3 at the outlet 100-2 of the diffuser 100 can include further inward-angled walls (not shown). Further, the diffuser 100 can facilitate the incoming cool air from the evaporator coils 202 to flow in an upward direction from the inlet 100-1, turning substantially by a 90° angle into a substantially horizontal direction towards the outlet 100-2 as shown in FIGs. 2E and 4, and further flowing out of the outlet 100-2 in a substantially horizontal direction into the cargo space 206 as shown in FIG. 2D

It is to be appreciated by a person skilled in the art that the expanding internal flow area of the diffuser 100 and the larger outlet 100-2 of the diffuser 100 can minimize internal and expansion aerodynamic losses. Additionally, the turning vanes 104 can facilitate the redistribution of the airflow through the turn of the diffuser 100, while lowering the aerodynamic losses and reducing the mean air discharge velocity, thereby enhancing the airflow uniformity, adjusting exit airflow angles, and guiding the airflow back into the cargo space 206. Thus, the turning vanes 104 can turn the airflow in the diffuser 100 and produce a cohesive jet at the outlet 100-2 of the diffuser 100 as shown in FIGs. 2E and 4. Moreover, the guide vanes 106 and/or the inward-angled walls can allow the creation of a uniform air jet exiting from the diffuser 100 into the cargo space 206 such that the airflow can reach an end of the cargo space 206 and further uniformly recirculated within the cargo space 206 as shown in FIGs. 2D.

In one or more embodiments, the turning vanes 104-1 to 104-N can be configured parallel to each other with a predefined gap therebetween such that the front end of the turning vanes 104 remains in line and a depth of the corresponding turning vanes 104, extending into the flow path 100-3, progressively increases from a bottom-most turning vane 104-A towards a top-most turning vane 104-N among the turning vane. For instance, the depth of the turning vane 104-2 can be higher than the depth of the bottom-most turning vane 104-1. Further, the depth of the top-most turning vane 104-N can be higher than the depth of the turning vane 104-2. Similarly, the depth of the turning vanes 104-t to 104-N progressively increases from a bottom-most turning vane 104-1 towards a top-most turning vane 104-N among the turning vane.

In one or more embodiments, at least one of the turning vanes 104 can include a flat portion 104-A at the front side and a downward extending curved portion 104-B at the rear side, where the turning vanes 104 blends from a curved arc at the center of the rear side towards the flat or straight edge at lateral ends of the front side of the turning vane 104. Further, in one or more embodiments, at least one of the turning vanes 104 can have a downward extending curved profile 104-B that blends from a curved arc at the center of the rear side towards a flat or straight edge at the lateral ends of the front side of the turning vane 104-1. For instance, but not limited to the like, the bottom-most turning vane 104-1 can have a downward extending curved profile 104-B, and the remaining turning vanes 1042 to 104-N can include the front flat portion 104-A and the downward extending curved portion 104-B at the rear side, such that the downward extending curved portion 104-B of all the turning vanes 104 can extend at least partially into the turning portion of the flow path 100-3 to redistribute incoming air while flowing through the turning portion of the flow path 100-3.

In one or more embodiments, the turning vanes 104 and the guide vanes 106 can be arranged in predefined orientations to form a finger guard at the outlet 100-2 to prevent the insertion of fingers or hands into the diffuser 100 via the outlet 100-2. For instance, in one or more embodiments, the turning vanes 104 can be configured horizontally and the guide vanes 106 can be configured vertically to form a grid acting as a finger guard while creating a uniform air jet existing from the diffuser 100 into the cargo space 206.

In one or more embodiments (not shown), the turning vanes 104 and the guide vanes 106 can be arranged in a predefined geometric configuration. For instance, in one or more embodiments, the turning vanes 104 and the guide vanes 106 can be oriented at predefined arbitrary angles. Further, in one or more embodiments; the turning vanes 104 and the guide vanes 106 can also form hexagon-shaped cells. Furthermore, in one or more embodiments, the turning vanes 104 and the guide vanes 106 can be non-uniformly spaced with respect to each other.

In one or more embodiments, the turning vanes 104 and/or the guide vanes 106 can be integrated into the outlet 100-2 of the diffuser 100, forming a single structure. However, in one or more embodiments (not shown), the turning vanes 104 and/or the guide vanes 106 can be removably attached to the diffuser cover 102 of the diffuser 100. In such embodiments, the turning vanes 104 and/or the guide vanes 106 and/or the inward-angled walls can be configured into a frame forming an auxiliary diffuser. This auxiliary diffuser can be configured to be attached to the outlet 100-2 of the diffuser 100.

In one or more embodiments, the diffuser 100 can include one or more turbulence control elements (not shown) including but not limited to wired screens or solid screens, configured at first predefined regions between the guide vanes 106 and/or the turning vanes 104. Further, in one or more embodiments, the diffuser 100 can include one or more flow straightening elements (not shown) including but not limited to honeycombs, configured at second predefined regions between the guide vanes 106 and/or the turning vanes 104. The flow straightening elements and the turbulence control elements can help minimize turbulence in the airflow jet exiting the diffuser 100 and ensure a uniform flow of air jet into the cargo space 206.

Thus, this invention (diffuser) overcomes the drawbacks, limitations, and shortcomings associated with high discharge velocity, aerodynamic losses, and poor outlet jet behavior that are commonly associated with existing air management systems associated with TRUs.

While the subject disclosure has been described with reference to exemplary embodiments, it will be understood by those skilled in the art that various changes may be made and equivalents may be substituted for elements thereof without departing from the scope of the subject disclosure as defined by the appended claims. Modifications may be made to adopt a particular situation or material to the teachings of the subject disclosure without departing from the scope thereof. Therefore, it is intended that the subject disclosure not be limited to the particular embodiment disclosed, but that the subject disclosure includes all embodiments falling within the scope of the subject disclosure as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. An air diffuser (100) for an evaporator of a transport refrigeration unit (TRU) (300), the diffuser comprising:
a thermal barrier (110) and diffuser cover (102) together defining a flow path (100-3) of the diffuser, the diffuser comprises an inlet (100-1, 208-1) having a circular profile, an outlet (100-2, 208-2) having a rounded-rectangular or oval-shaped profile, and a flow path extending in an upward direction from the inlet and turning substantially by a 90° angle into a substantially horizontal direction towards the outlet, wherein an internal flow area of the flow path increases from the inlet towards the outlet;
one or more turning vanes (104-1 - 104-N) configured at the outlet such that at least a curved portion of the turning vanes extends at least partially into the flow path, wherein the one or more turning vanes are having a varying shape where the curved portion at a center transitions to a flat profile portion at lateral ends of the corresponding tuning vanes; and
one or more guide vanes (106) configured at the outlet of the diffuser cover.

2. The air diffuser of claim 1, wherein the one or more turning vanes are configured parallel to each other with a predefined gap therebetween, such that the front end of the one or more turning vanes remains in line and a depth of the cascading turning vanes, extending into the flow path, progressively increases from a bottom-most turning vane towards a top-most turning vane among the one or more turning vanes.

3. The air diffuser of claim 1 or claim 2, wherein the one or more turning vanes are configured at the outlet such that downward extending curved portion of the turning vanes extends at least partially into the turning portion of the flow path to redistribute incoming air while flowing through the turning portion of the flow path.

4. The air diffuser of any one of claims 1 to 3, wherein the flow path at the outlet of the diffuser comprises inward-angled walls.

5. The air diffuser of any one of claims 1 to 4, wherein the one or more turning vanes and the one or more guide vanes are arranged in predefined orientations to form a finger-guard at the outlet to prevent insertion of fingers or hand into the diffuser via the outlet.

6. The air diffuser of any one of claims 1 to 5, wherein the one or more turning vanes are configured horizontally and the one or more guide vanes are configured vertically to form a grid.

7. The air diffuser of any one of claims 1 to 5, wherein the one or more turning vanes and the one or more guide vanes are arranged in a predefined geometric configuration selected from any of:
the one or more turning vanes and the one or more guide vanes being oriented at predefined arbitrary angles;
the one or more turning vanes and the one or more guide vanes forming a hexagon-shaped cells, and/or
the one or more turning vanes and the one or more guide vanes being non-uniformly spaced with respect to each other.

8. The air diffuser of any one of claims 1 to 7, wherein a ratio of an area of the inlet to an area of the outlet is in a range selected from 1.1 to 2.0.

9. The air diffuser of any one of claims 1 to 8, wherein the outlet has a width-to-height ratio of less than 4.

10. The air diffuser of any one of claims 1 to 9, wherein the one or more turning vanes and/or the one or more guide vanes are integrated into the outlet of the diffuser, forming a single structure.

11. The air diffuser of any one of claims 1 to 10, wherein at least a part of the flow path is formed by a single-piece molded part comprising of any of the diffuser cover, the one or more turning vanes, the one or more guide vanes, and/or finger-guard components.

12. The air diffuser of any one of claims 1 to 11, wherein the one or more turning vanes and/or the one or more guide vanes are configured to be removably attached to the diffuser; and/or
wherein the one or more turning vanes and/or the one or more guide vanes and/or the inward-angled walls are configured into a frame forming an auxiliary diffuser, wherein the auxiliary diffuser is configured to be attached at the outlet of the diffuser.

13. The air diffuser of any one of claims 1 to 12, wherein one or more fans (108) are configured upstream of the outlet of the diffuser or at the inlet of the diffuser; and, optionally
wherein the one or more fans are selected from a group comprising an axial fan, a centrifugal fan, and/or a mixed-flow or diagonal-flow fan.

14. The air diffuser of claim 13, wherein the inlet of the diffuser is configured to accommodate the one or more fans in series and/or parallel.

15. The air diffuser of any one of claims 1 to 14, wherein the diffuser comprises one or more turbulence control elements comprising wired screens at first predefined regions between the one or more guide vanes and/or the one or more turning vanes; and/or
wherein the diffuser comprises one or more flow straightening elements comprising honeycombs at second predefined regions between the one or more guide vanes and/or the one or more turning vanes; and/or
wherein the diffuser is configured to be configured downstream of evaporator coils (202) or evaporator fans associated with the evaporator, wherein the diffuser facilitates the incoming air from the evaporator coils to flow in an upward direction from the inlet, turning substantially by a 90° angle into a substantially horizontal direction towards the outlet, and further flowing out of the outlet in a substantially horizontal direction.
